# EUROPEAN PATENT APPLICATION

(11) **EP 1 940 172 A1**
(43) Date of publication of application: **02.07.2008**
(21) Application number: 07020953.1
(22) Date of filing: 25.10.2007
(51) Int. Cl.: H04N 7/24

(54) **Content provision to a mobile device and presentation thereof**

(30) Priority: 25.10.2006 GB 0621236
(71) Applicant: Vodafone Group PLC, Newbury Berkshire RG14 2FN (GB)
(72) Inventor: Gill, Trevor, Reading RG31 6FN (GB)
(74) Representative: Keston, David Arthur

(57) **Abstract**

A method of and mobile device and system for selectively presenting content parts to a user of a mobile device. At least two content parts are stored on the device and each content part has at least one attribute indication assigned thereto. The mobile device selects content parts to be presented to the user in dependence upon said at least one attribute indication of each content part. The method also includes selectively receiving at a mobile device content from a plurality of transmitted content parts. Each of said plurality of content parts has at least one attribute indication associated therewith and may be transmitted at a predetermined transmission time. The mobile device receives prior to transmission of the plurality of content parts information indicative of the transmission time and of said at least one attribute indication of each of said plurality of content parts.

## Description

The invention relates to a method of selectively receiving content at a mobile device and a mobile device for selectively receiving content from a transmitting means, and a system for allowing a mobile device to selectively receive content. In addition, the invention relates to a method of and a system and a mobile device for selectively presenting content parts to a user of a mobile device.

US2006/0026088A1 discloses a system for delivering stocks based content and news content to a mobile device for access by a user. Such content is broadcast from a broadcast tower on designated channels. The particular content delivered may be customised according to the user's preferences. It is a problem with this system and other systems for content delivery that the mobile device must be enabled to receive transmitted content at all times. The mobile device being so enabled causes drain on the battery of the mobile device.

In addition, content delivery systems such as that described in US2006/0026088A1 require new content to be transmitted regularly in the form of updates. It is often difficult for a user to become quickly up-to-date on the news or stocks content since the last time the user accessed the mobile device, especially without accessing for a further time previously consumed content. Also, the delivery of content, for consumption in real time or otherwise, puts load on a network. It is desirable to reduce that load.

According to an aspect of the present invention, there is provided a method as claimed in independent claim 1, a mobile device as claimed in independent claim 9 and a system as claimed in independent claim 12.

An embodiment of the invention will now be described, by way of example only, with reference to the accompanying drawings, in which:
Figure 1 shows schematically the components of a system for content delivery including a central server and a mobile device in accordance with the embodiment;
Figure 2 is a flow chart showing the operations performed on content parts; and
Figure 3 is a flow chart showing a power saving process according to the embodiment.

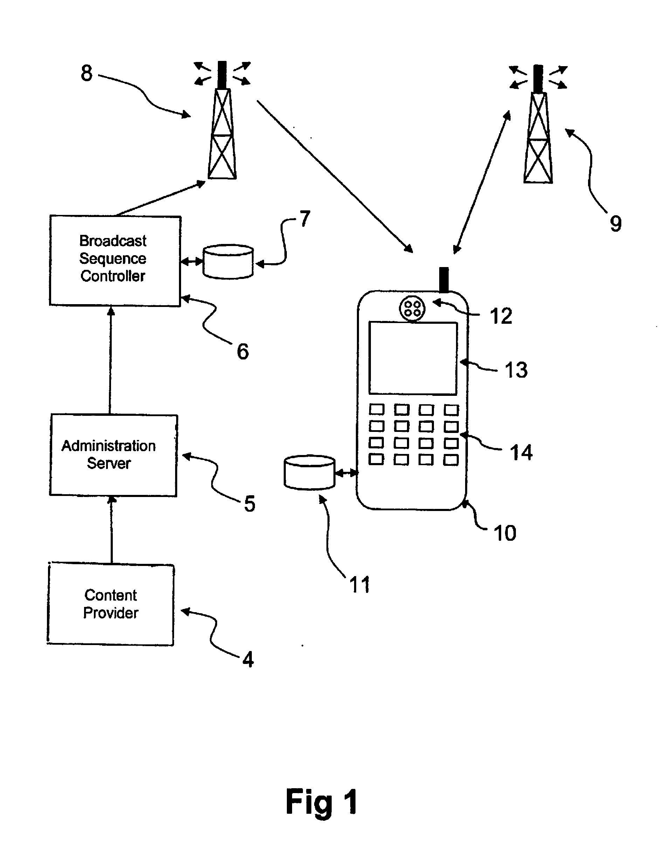

One application of the present invention is as part of a service wherein content originating from a content provider is delivered to a user's mobile device over a broadcast channel. Figure 1 shows the content provider 4, an administration server 5, a broadcast sequence controller 6, a broadcast sequence controller message store 7 associated with the broadcast sequence controller 6, and a mobile device 10. The administration server 5 is in communication with the content provider 4 and the broadcast sequence controller 6 (for example, using a fixed or wireless link) to enable the content provider 4 to upload material to the administration server 5. Material is thence uploaded as content parts to the broadcast sequence controller 6, which stores the content parts in the broadcast sequence controller message store 7.

An operator of the administration server 5 edits the material and makes arrangements as to which material is to be transmitted, and the administration server 5 sends the selected, edited and, if necessary, formatted material as content parts to the broadcast sequence controller 6. Content parts are generally accessed by the user in the form of video or audio with associated still pictures, although the content may be video with or without audio, still pictures, perhaps in the form of a slide show, with or without text or audio, partly or wholly text or audio, or any combination of these, or any other medium or combination of media. Content parts to be transmitted are each assigned one or more labels each containing one or more attributes at the administration server 5, as described in greater detail below.

The broadcast sequence controller 6 manages use of air time, including controlling when a content part is transmitted and including transmitting at intervals a sequencing message containing a schedule indicating transmission times of content parts and the labels of the content parts that will be transmitted according to the schedule, as described further below. The broadcast sequence controller 6 maintains a store of current content parts and their labels in the broadcast sequence controller message store 7 and sends the content parts and the labels to the broadcast transmitter 8 for transmission.

The mobile device 10 is a device capable of receiving content parts broadcast by the broadcast transmitter 8. The mobile device is in this embodiment also able to communicate with a communications network 9, such as an IP network via a wired or wireless link, or a wireless telecommunications network such as a GSM or UMTS (3G) network. The mobile device 10 comprises a display 13, a loudspeaker 12, an input interface 14, and a device message store 11. The mobile device 10 also comprises a receiver (not shown) capable of receiving content on the broadcast channel. Received content is stored in the device message store 11. The embodiment described further below has a single mobile device, but it will be appreciated that in practice there will be many mobile devices.

The broadcast transmitter 8 transmits content parts on one or more channels and is any suitable type of broadcast transmitter. The same content parts are receivable by multiple devices.

Each label borne by a content part contains a number of attributes of that content part, such as (but not exclusively and not necessarily including): a time of creation (time stamp), a category, a theme sequence number, a theme update number, a list of update numbers that the content part supersedes, and an urgency level indicator. A theme sequence number is a number allocated to content parts to define a set of content parts, that is, all content parts with that number comprise the set. The content parts in the set would usually have a related theme. A theme update number is allocated to each content part in such a set to indicate the order of content parts in that set; for example, a first content part on a theme is given a theme sequence number 1 and a theme update number 1; a second content part also on that theme is given a theme sequence number 1 and a theme update number 2. The list of update numbers to supersede comprises the update numbers of the content parts that are to be superseded by the content part having the attribute of the list. Continuing the example, a third content part having a theme sequence number 1 and a theme update number 3 also has a list of update numbers comprising the number 2. Such update numbers, lists and the time of creation of the content parts are used by the broadcast sequence controller 6 to prioritise transmission of content parts. In this example, the list indicates that the content part with update number 3 has priority over the content part with update number 2. In addition, the content part with update number 3 is newer than that with update number 1. A current bulletin on theme 1 would therefore consist of update number 1 followed by update 3, omitting update 2 which has been superseded.

A supplementary label is optionally appended to a content part containing links that might be of interest to the user. Such a link is in the form of an URL or an alternative form. Content is stored in the message store 7 in the form of individually consumable content parts. Timing information is embedded in each content part to control the presentation of that content part.

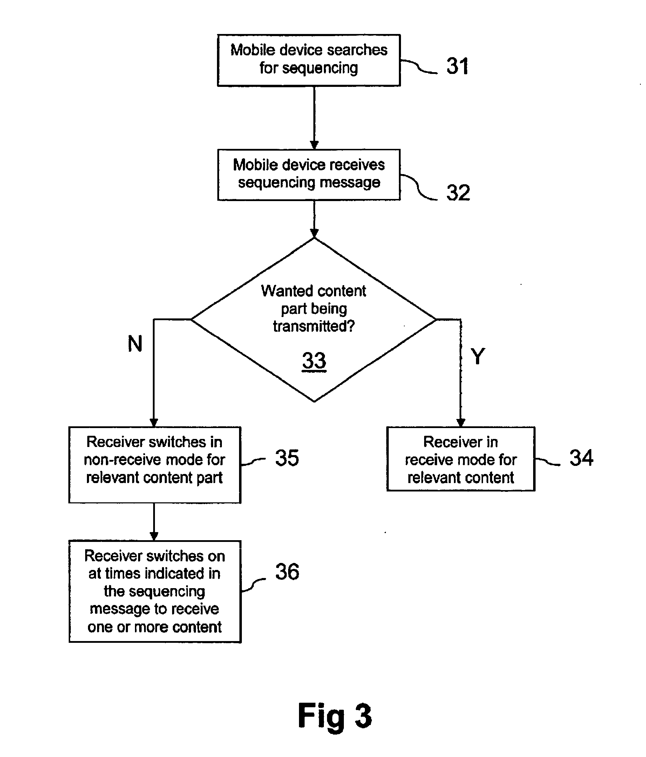

The user of the mobile device 10 inputs to the mobile device preference information regarding the content that he wants to receive via the input interface 14. Once a sequencing message is received, the mobile device determines from the schedule, the labels in the sequencing message and from the preference information, the content parts that will be broadcast according to the schedule that are wanted in accordance with the preference information. The mobile device does this by determining whether one, some or all attributes of a content part are in a set of attributes determined by the preference information and, if so, will receive or not receive that content part in accordance with the preference information. Alternatively, the mobile device does this in an equivalent way by determining whether one, some or all attributes in accordance with the preference information is/are amongst the attribute or attributes of a content part and, dependent thereon, receives or does not receive that content part. The mobile device then selectively receives the broadcast content parts in the manner to be described with reference to Figure 3.

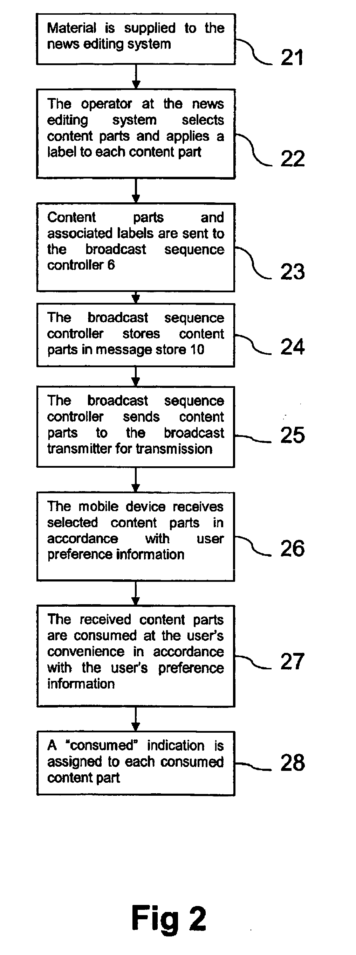

Referring to Figure 2, at 21, material is supplied to the administration server 5. At 22, the material is edited by the operator, who selects individual content parts and applies a label to each.

At 23 in Figure 2, content parts and labels associated with those content parts are sent from the administration server 5 to the broadcast sequence controller 6. At 24, the broadcast sequence controller 6 stores current content parts and their respective labels in the message store 7 and, at 25, sends these to the broadcast transmitter 8 at appropriate times for transmission.

Generally, new content parts are transmitted in preference to previously transmitted content parts. If no new content parts are available, the broadcast sequence controller 6 will cause to be transmitted previously transmitted content parts. Frequency of retransmission of a content part is preferably reduced as that content part becomes older. Content parts are prioritised using the list of update numbers so that content parts that have been superseded by a newer content part are not sent for transmission by the broadcast sequence controller 6. This retransmission strategy is advantageous because a user who has not received content due to, for example, a mobile device being switched off or out of a transmission coverage area, is able to catch up with the most current news as quickly as possible with a minimum, if any, repetition of viewing and/or receipt of content.

At 26, the mobile device then selectively receives the transmitted content parts in accordance with the user preference information and attributes in the labels of the transmitted content parts. At 27, the received content parts are consumed by the user at the user's convenience, in accordance with the user preference information and attributes of content parts. It can optionally be prescribed in the preference information that a content part received longer ago than a predetermined period or created longer ago than a predetermined period will not be displayed.

Once a content part is displayed by the mobile device, a "viewed" indication is associated with that content part, as indicated at 28. Content parts with such an associated indication are not displayed when a request to display content is made. Displayed content parts are retained in the message store 11 for a predetermined period, typically 24 hours, before being deleted by the mobile device. During that period, the user interface 14 allows selection of the stored content parts for repeat viewing. The period can optionally be set in the preference information.

The manner of selection of the content parts by the receiver is an important aspect of the invention and is described in the following with reference to Figure 3. The broadcast sequence controller 6 transmits at the end of predetermined intervals a sequencing message containing the labels of all the content parts to be transmitted over at least the next time interval, together with a schedule indicating the time at which each content part will be transmitted. The receiver has a receive mode in which it is enabled to receive transmitted content and a non-receive mode in which it is not so enabled. The receiver is set to switch to receive mode at the end of each predetermined interval in order to receive a sequencing message.

Once in receive mode, the receiver searches for a new sequencing message, as shown at 31 in Figure 3. At 32, the receiver receives the new sequencing message. The mobile device determines, as indicated at 33, from labels in the sequencing message and from the preference information, the content parts that will be broadcast according to the schedule that are wanted in accordance with the preference information. The mobile device then determines at what times the receiver must be in receive mode in order to receive the wanted content parts. After receiving the new sequencing message, if a wanted content part is being transmitted, the receiver will remain in receive mode, as shown at 34, in order to receive such a part. If, after receiving the new sequencing message, no wanted content part is being transmitted or a content part is being transmitted that has already been received, the receiver switches to the non-receive mode, as shown at 35. The receiver then returns to receive mode when a wanted content part is being transmitted in order to receive the part, as shown at 36. All received content parts are stored in a device message store 11 together with their respective labels.

One advantage of the receiver being allowed to switch to a non-receive mode is that less power is used in that mode. Accordingly, battery power is saved.

Preferably, sequencing messages contain information regarding content part labels and indications of content transmission times beyond the next scheduled transmission of a sequenced message. Sequencing messages may also be retransmitted at predetermined times in order to ensure that they are properly received.

An important benefit of implementing the above described system is that because the content parts are stored in the device message store, content need not necessarily be sent to the mobile device at a "real time" data rate. Content parts can be streamed at a lower data rate, which may be 5-10% of the "real time" data rate. Also, if a content part is not properly received, for example, due to transmission or reception difficulty, the content part can be received later and viewed concatenated with earlier received content parts for display.

An example of the embodiment is described in detail below to aid understanding of the embodiment and of the invention. The content in the example is news content broadcast on a news channel. The administration server 5 is in this embodiment in the form of a news editing system. In the embodiment, a story is the first content part transmitted from the broadcast sequence controller 8 on a particular subject; for example, the story might be that the Prime Minister goes on holiday. An update is a content part transmitted following from an earlier story and related to the earlier story but including new information. A storyline is a story together with any updates relating to that story - for example, a storyline may begin with the story that the Prime Minister goes on holiday, and then continues with updates on the Prime Minister's holiday. A storyline thus comprises at least two content parts, one of which is a story and the other of which is an update.

In a label, an attribute can be, for the purposes of this example: the category of world, sport, business, technology, humour, entertainment or weather; a time of creation; a theme sequence number in the form of a storyline sequence number; a theme update number in the form of a storyline update number; a list of update numbers that an update supersedes; or an urgency level indicator. Further attributes are assignable to the label, such as an attribute comprising the name of a sports team or a sports team's competitor or the name of a famous person.

A typical news storyline develops over a day or over several days or weeks. The storyline sequence number is a number allocated to each storyline. An update may supersede the story and/or an earlier update or updates. The list of update numbers (which may include a reference number for the story) comprises earlier numbers in the sequence that are superseded, resulting in the earlier updates and possibly the story becoming de-prioritised.

The preference information for this example inputted by the user includes, but neither necessarily includes and nor is limited to: categories (for example, domestic, world, sport, business, technology, humour, entertainment and weather) in relation to which the user wants to receive content; a maximum age determined from time of creation of a content part; and a maximum age from receipt by the mobile device of the content part. The mobile device thus receives content parts in accordance with the preference information - the receiver switches to receive mode when wanted content parts are being transmitted. Also, a content part received in accordance with the preference information may never be displayed after that content part is deemed superseded by a further content part, it will be stored. After being stored for a predetermined period, it will be deleted by the mobile device. The period can be set in the preferred information. In addition, content parts exceeding a predetermined age are deleted whether superseded or not. This age can be set in the preference information.

In order to view the news, the user selects this service on the mobile device. The mobile device then delivers a news bulletin comprising one or more content parts, which are stored in the device message store 11. The content parts displayed in the bulletin are present on a "play list" in the mobile device, which is updated dynamically in accordance with the preference information and the attributes in the label of each content part. A content part having a label containing a list of update numbers that that content part supersedes any content parts having an update number present on the list, and so those content parts are not displayed. In general, content parts are displayed chronologically in the order the content parts have been received since the news was last viewed on the mobile device, or in the reverse of that order.

The content parts can be concatenated by the mobile device for continuous, single step consumption by the user. Each story, update or storyline can be "skipped", in which case the next content part or storyline is displayed. A storyline can optionally be ignored, in which case the next storyline is displayed and the preference information is updated so that updates on that storyline are not received or displayed. Such options are typically selected using soft keys.

A "news flash" facility may also be possible. If a content part bears a label containing an urgency level indicator, the user can specify in the preference information that the mobile device alert the user by making an audible and/or visual signal when that content part is received. The urgency level indicator can have a number of levels - only such an indicator at or above a level predetermined in the preference information will cause an alert. Such indicators can also be in different categories, resulting in difference audio and/or visual signals. For example, a content part received relating to a goal by one football team could result in one alert, whilst a content part received relating to a goal by a football team playing against the one football team might result in another alert. The user can view the received content parts at the user's convenience.

Optionally, the user can be alerted whenever a new content part is received.

The mobile device is optionally presented with links to further relevant information in the supplementary label at the end of consuming a news bulletin.

The mobile device preferably includes a subsystem capable of accessing a communications network such as a GSM and/or UMTS (3G) telecommunications network, or an IP network via a fixed link or a wireless link such as a Bluetooth ® link. The links may be addresses of sites from which additional material can be accessed via the communications network.

Optionally, the categories in the preference information are divided into subcategories, and the attributes of the content are subdivided correspondingly. Optionally, the subcategories are divided into subcategories and so on. For example, "Domestic" is divided into "UK Politics" and other subcategories. "UK Politics" may be divided into "General Election Campaign" and other subcategories. In the "General Election Campaign" subcategory, a storyline might be "Prime Minister visits Manchester". A user could optionally choose not to receive/have displayed further content parts about that storyline or could optionally choose not to receive/have displayed all future content in the "General Election" subcategory.

Optionally, a weather forecast service is selectable. Such a service can be broadcast on a different channel to the news or on the same channel. The user can specify in the preference information a particular locality for which weather forecast related content is wanted, and the mobile device would then only receive content parts with a label containing an attribute indicative of the locality or a region including that locality.

There are various modifications that can be made to the above described embodiment that can be made within the scope of the invention.

In the embodiment described above, the content delivered is news content, but other types of content can be provided to a mobile device in accordance with the invention, such as stocks based content or sports based content. Such content may all be transmitted on one channel or on several channels. Transmission of content on a channel may be continuous, but is not necessarily so. Content comprising a description of the available channels is optionally transmitted at intervals and, if received, is viewable. The user interface would allow selection of a channel.

Similarly, advertisements can be transmitted and received. The advertisements could carry an attribute that the mobile device will always receive, with no opt out in the preference information. The advertisements can be repeatedly displayed and stored in the device message store for a period determined by the operator of the news editing system.

The mobile device does not have to be able to communicate with the communications network 9 to be in accordance with the invention - for example, the broadcast network might be MBMS (3G), DVD, or DAB. In another embodiment however, content is transmitted over a communications network, such as a GSM or 3G telecommunications network 3, which transmits in a known way in accordance with GSM/3G Standards. The broadcast sequence controller 8 is in communication with the base transceiver station of the GSM/3G network by a fixed or wireless link. The broadcasting transmitter is in this case a base transceiver station in the telecommunications network.

It is envisaged that the above described system will be implemented for a mobile device to receive news and sports related content, but the system need not be limited to the provision of such content - transmitted content relating to any topic may be received.

## Claims

1. A method of selectively presenting content parts to a user of a mobile device, at least two content parts being broadcast on a channel by broadcasting means and each content part having at least one attribute indication assigned thereto; the method including:
receiving broadcast content parts;
storing said broadcast content parts; and
selecting at least one content part from said stored content parts to be presented to the user;
**characterised in that** the selection is in dependence upon said at least one attribute indication of each content part.

2. A method according to claim 1, wherein the step of receiving content parts is selective, said selectivity being in dependence upon said at least one attribute indication.

3. A method according to either one of claims 1 or 2, further including:
receiving data indicative of whether content parts are to be presented dependent upon their respective at least one attribute indication; and
selecting the content parts to be presented in dependence upon said data.

4. A method according to any one of claims 1 to 3, wherein said at least one attribute indication is selected from the group of: time of creation of the part; a category to which the content part is assigned; a storyline sequence number; a storyline update number; a list of update numbers indicating content parts that the content part with which the attribute is associated supersedes; and an urgency level indicator.

5. A method according to any one of claims 1 to 4, wherein one of the attribute indications associated with each of at least two content parts comprises a priority rating, the priority ratings of said content parts being comparable, the method further including prioritising presentation of the content parts in dependence on said priority ratings.

6. A method according to any one of claims 1 to 5, further including:
receiving preference information, and
presenting the content parts in an order dependent on said preference information and said at least one attribute indication of each content part.

7. A method according to any one of claims 1 to 6, wherein an attribute indication comprises an alert indication and wherein the method further includes causing the user to be alerted by audio or visual or vibration means upon receipt of a content part having such an indication.

8. A method according to any one of claims 1 to 7, wherein said content parts comprise a news bulletin.

9. A mobile device for selectively presenting content parts to a user of a mobile device, at least two content parts being broadcast on a channel by broadcasting means and each content part having at least one attribute indication assigned thereto; wherein the mobile device is adapted to receive and store broadcast content parts and **characterised in that** the device in operation selects at least one content part from said stored content parts to be presented to the user in dependence upon said at least one attribute indication of each content part.

10. A mobile device according to claim 9, adapted to implement the method of any one of claims 1 to 8.

11. A mobile device according to claim 9 or claim 10, wherein the broadcasting means forms part of a broadcast network, the broadcast network using a broadcast protocol selected from a group including: MBMS, DVB, DAB, UMTS (3G) and GSM.

12. A system for selectively presenting content parts to a user of a mobile device, the system including:
broadcasting means for broadcasting on a channel at least two content parts, each content part having at least one attribute indication assigned thereto; and
a mobile device for receiving and storing said transmitted at least two content part, said mobile device selecting at least one content part from the stored content parts to be presented to the user;
**characterised in that** the selection of content parts for presentation is in dependence upon said at least one attribute indication of each content part.

13. A system according to claim 12 adapted to carry out a method according to any one of claims 1 to 8.

14. A system according to claim 12 or claim 13, wherein the broadcasting means forms part of a broadcast network, the broadcast network using a broadcast protocol selected from a group including: MBMS, DVB, DAB, UMTS (3G) and GSM.

15. A method according to any one of claims 1 to 8, a mobile device according to any one of claims 9 to 11, and a system according to any one of claims 12 to 14, excluding the use of SMIL files to present content parts to the user.
